# EUROPÄISCHE PATENTANMELDUNG

(11) **EP 2 123 963 A1**
(43) Veröffentlichungstag der Anmeldung: **25.11.2009**
(21) Anmeldenummer: 09450099.8
(22) Anmeldetag: 14.05.2009
(51) Int. Cl.: F16L 55/165

(54) **Verfahren zum Abdichten eines Rohrabschnittes**

(30) Priorität: 19.05.2008 AT 7972008
(71) Anmelder: Kübel, Johann, 3072 Kasten (AT)
(72) Erfinder: Kübel, Johann, 3072 Kasten (AT)
(74) Vertreter: Wildhack, Andreas

(57) **Zusammenfassung**

Die Erfindung betrifft ein Verfahren zum raschen Abdichten eines Rohrabschnittes (21) in einem Rohr (2) mittels eines aushärtbaren, teilweise ausgehärteten, flachen, insbesondere rechteckförmigen, Einlagestücks (1) oder PrePregs.

Erfindungsgemäß ist vorgesehen, dass zumindest auf die Außenfläche des Einlagestücks (1) Klebstoff (5) aufgebracht wird, zwischen zwei übereinandergelegte Endbereiche (11, 12) des Einlagestücks (1) Klebstoff (5) eingebracht wird, wodurch dem Einlagestück (1) die Form eines Zylindermantels erteilt wird, das Einlagestück (1) auf einen langgestreckten Ballon (4) aufgebracht wird, ein Teil des Einlagestücks (1) an den Ballon (4) angelegt und dessen Mantel (41) zumindest in einem Teilbereich durchgehend abdeckt wird und der restliche, nicht am Ballon (4) anliegende Bereich (15) des Einlagestücks (1) in Form einer Schlaufe (16) eingeschlagen und an die Außenfläche des Einlagestücks (1) angedrückt wird, der Ballon (4) mit dem Einlagestück (1) in das Rohr (2) eingebracht und darin derart positioniert wird, und der Ballon (4) aufgeblasen, das Einlagestück (1) an die Innenwand des Rohres (2) angedrückt und der Klebstoff (5) ausgehärtet werden (Fig. 1).

## Beschreibung

Die Erfindung betrifft ein Verfahren gemäß dem Oberbegriff des Anspruchs 1.

Derartige Verfahren werden insbesondere zur Innen-Abdichtung von Rohren, vorzugsweise in Abwasserkanälen, eingesetzt.

Ein wesentliches Problem des Standes der Technik besteht darin, dass die Abdichtung von Rohren sehr zeit- und arbeitsaufwändig ist. Bei Verfahren nach dem Stand der Technik werden häufig Vliese eingesetzt, welche in Kunstharz getränkt werden und anschließend auf einen Ballon aufgebracht und in das Rohr eingeführt werden. Diese Arbeitsschritte sind zum Teil sehr unsauber, da der auf das Vlies aufgebrachte Klebstoff mitunter auf dem Ballon haften bleibt bzw. vom Vlies tropft. Ein exaktes Anbringen des Vlieses ist nicht gut möglich.

Die Erfindung hat die Aufgabe, diese Probleme zu beseitigen und ein Verfahren zum raschen Abdichten eines Rohres zur Verfügung zu stellen.

Die Erfindung löst diese Aufgabe mit den kennzeichnenden Merkmalen des Anspruchs 1.

Als vorteilhaft erweist sich, dass durch das von außen erfolgende Auftragen des Klebstoffes das Verkleben des Einlagestücks mit dem Ballon bzw. der Verlust des Klebstoffs vor bzw. während des Einbringens des Einlagestücks in das Rohr vermieden wird. Darüber hinaus besteht der Vorteil, dass der Klebstoff besonders gleichmäßig auf die Oberfläche des Einlagestücks bzw. des Rohrs verteilt wird und eine gute Klebewirkung des Einlagestücks am Rohr erzielt wird. Ferner wird durch die kompakte Lagerung des Einlagestücks während des Einbringens ein Abrieb des Einlagestücks am Rohr vermieden.

Mit den kennzeichnenden Merkmalen des Anspruchs 2 wird eine besonders einfache Ausformung eines Einlagestücks ermöglicht.

Mit den kennzeichnenden Merkmalen des Anspruchs 3 wird das Anhaften des Rohreinlagestücks am Ballon während des Einbringens des Einlagestücks in das Rohr verbessert.

Mit den kennzeichnenden Merkmalen des Anspruchs 4 wird die Haftung des Einlagestücks an der Innenoberfläche des Rohrs verbessert. Ferner werden die Dichteigenschaften des Einlagestücks gegenüber dem Rohr verbessert.

Mit den kennzeichnenden Merkmalen des Anspruchs 5 kann der Zeitpunkt der Aushärtung besonders genau vorgegeben werden.

Mit den Merkmalen des Anspruchs 6 wird eine besonders günstige Haftwirkung des Einlagestücks am Rohr bewirkt.

Mit den kennzeichnenden Merkmalen des Anspruchs 7 wird ein einfaches Aushärten vom Inneren her möglich.

Mit den kennzeichnenden Merkmalen des Anspruchs 8 ist ein besonders einfaches Aufbringen des Einlagestücks am Ballon sowie eine gute Anpassung des Einlagestücks an den Innenbereich des Rohrs möglich.

Mit den kennzeichnenden Merkmalen des Anspruchs 9 wird eine Beschädigung des Einlagestücks und/oder Klebstoffverlust des Einlagestücks beim Einbringen des Einlagestücks in das Rohr vermieden.

Mit den Merkmalen des Anspruchs 10 kann auf besonders einfache Weise eine gleichmäßige Klebstoffverteilung an der Oberfläche erreicht werden.

Die kennzeichnenden Merkmale des Anspruchs 11 ermöglichen ein tropffreies Einbringen des Einlagestücks in das Rohr.

In Fig. 1 ist ein Rohrabschnitt dargestellt, in welchem ein Ballon, der von einem fahrbaren Roboter getragen ist, das Einlagestück in das Rohr einbringt.

In Fig. 2 ist ein Einlagestück ausgerollt dargestellt.

Fig. 3 zeigt ein auf einen Ballon aufgebrachtes Einlagestück, bei welchem die nicht vollflächig anliegenden Bereiche zu einer Schlaufe zusammengefaltet sind.

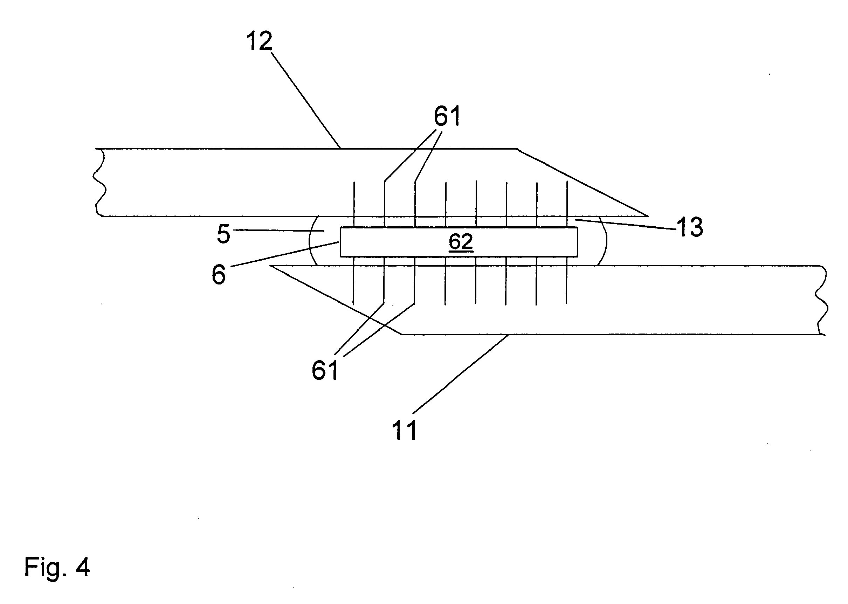

Fig. 4 zeigt den Überlappungsbereich, welcher beim Zusammenrollen des Einlagestücks zu einem Hohlzylinder auftritt.

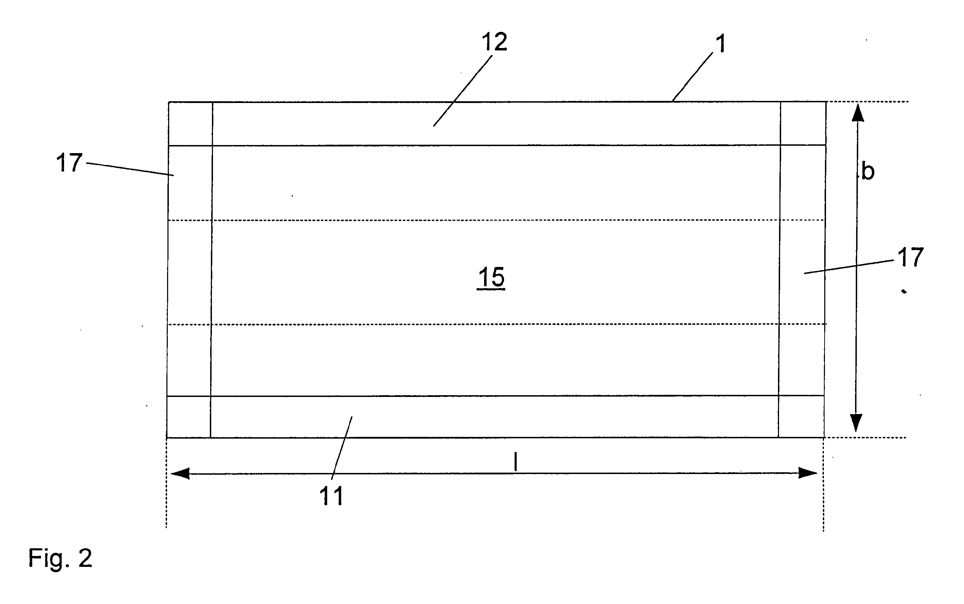

Fig. 2 zeigt ein rechteckförmiges Einlagestück 1. Die Länge I des Einlagestücks 1 entspricht dabei etwa 120% bis 200% der Länge der abzudichtenden Schadstelle. Die Breite b des Einlagestücks 1 liegt im Bereich zwischen 105% und 130% des Innenumfangs eines abzudichtenden Rohres 2. Die beiden gegenüber angeordneten Endbereiche 11, 12 werden vor dem Einbringen des Einlagestücks 1 in das Rohr 2 zur Deckung gebracht. In den durch die Deckung ausgebildeten Überlappungsbereich 13 zwischen den beiden Endbereichen 12, 13 wird Klebstoff 5 eingebracht, wodurch dem Einlagestück 1 die Form eines Zylindermantels, Hohlzylinders oder Ringzylinders erteilt wird. Der Durchmesser des Einlagestücks 1 entspricht dabei bis auf geringe Abweichungen dem Innendurchmesser des Rohrs 2 oder ist geringfügig kleiner als dieser.

Die Breite der Endbereiche 11, 12 entspricht der Breite des Überlappungsbereiches und entspricht etwa 5 % bis 15 % des Innenumfangs des Rohrs bzw. 5 % bis 30 % der Breite b des Einlagestücks.

In Fig. 2 sind ferner zwei äußere Endbereiche 17 am Einlagestück dargestellt, welche sich im Bereich der Öffnungen an den äußeren Umfangsflächen des ringzylindrisch geformten Einlagestücks 1 befinden. Die Breite dieser äußeren Endbereiche beträgt 2 % bis 10 % der Länge des Einlagestücks 1. Auf diese äußeren Endbereiche 17 ist eine weitere Klebstoffschicht 51 aufgetragen.

Bevorzugterweise kann diese zusätzliche Klebstoffschicht 51 mit einem in Wasser aushärtenden oder wasserfesten Hypoxidharz gebildet sein.

Das Einlagestück 1 ist aus homogenem Material geformt, die beiden Flächen des Einlagestücks 1 weisen typischerweise die gleiche Oberflächenbeschaffenheit auf. Auf einer der beiden Seiten wird oberflächlich insbesondere vollflächig ein Klebstoff 5 aufgebracht. Diejenige Seite, auf welche der Klebstoff 5 aufgebracht worden ist, wird in weiterer Folge beim Zusammenrollen des Einlagestücks 1 die Außenoberfläche bilden.

Die beiden genannten Verfahrensschritte, nämlich das Aufbringen des Klebstoffs 5 und das Zusammenrollen des rechteckförmigen Einlagestücks 1 zur Form eines Ringzylinders können dabei grundsätzlich in beliebiger Reihenfolge durchgeführt werden.

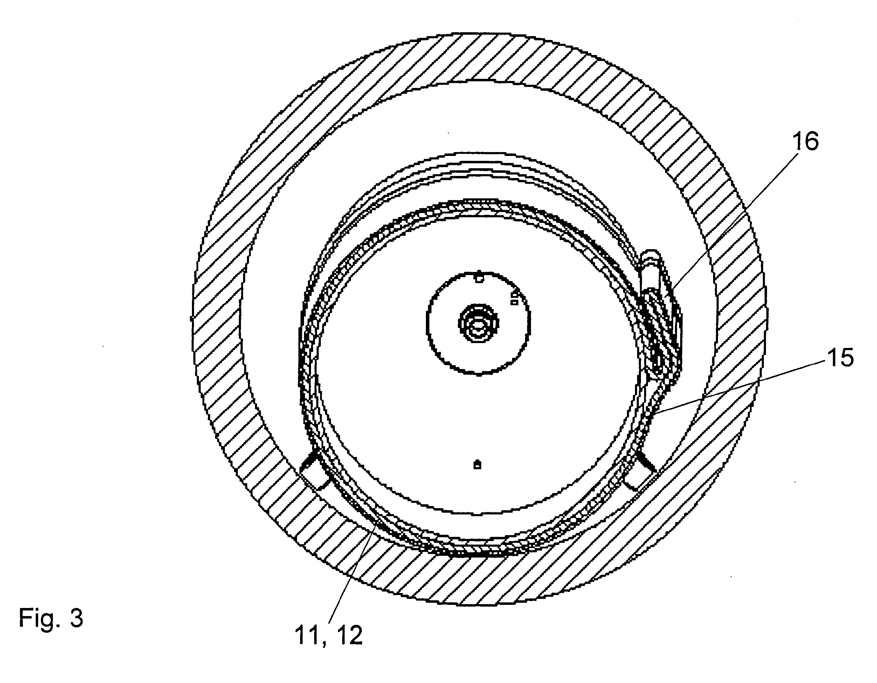

Fig. 3 zeigt das Einlagestück 1 auf einen langgestreckten, im Wesentlichen zylindrischen Ballon 4 aufgebracht, diesem übergestülpt bzw. um diesen herumgelegt. Der Durchmesser des Ballons 4 ist dabei kleiner als der Innendurchmesser des Rohrs 2. Um ein einfaches Einbringen des Einlagestücks 1 in das Rohr 2 zu ermöglichen, wird der Durchmesser des Ballons 4 auf einen Wert von kleiner als 60% bis 80% des Innendurchmessers des Rohrs 2 gewählt. Dabei wird das Einlagestück 1 mit seiner inneren Manteloberfläche an die äußere Manteloberfläche des Ballons 4 vollflächig angelegt. Ein Teil des Einlagestücks 1 wird an den Ballon 4 angelegt und dessen Mantel 41 deckt dabei zumindest einen Teilbereich des Ballons 4 durchgehend ab. Aufgrund der unterschiedlichen Radien des Ballons 4 und des ringzylindrischen Einlagestücks 1 bleibt am Einlagestück 1 ein restlicher, nicht am Ballon 4 anliegender Bereich 15 übrig. Dieser nicht anliegende Bereich 15 des Einlagestücks 1 wird in Form einer Schlaufe 16 eingeschlagen und die Schlaufe 16 wird an den Ballon 4 angedrückt.

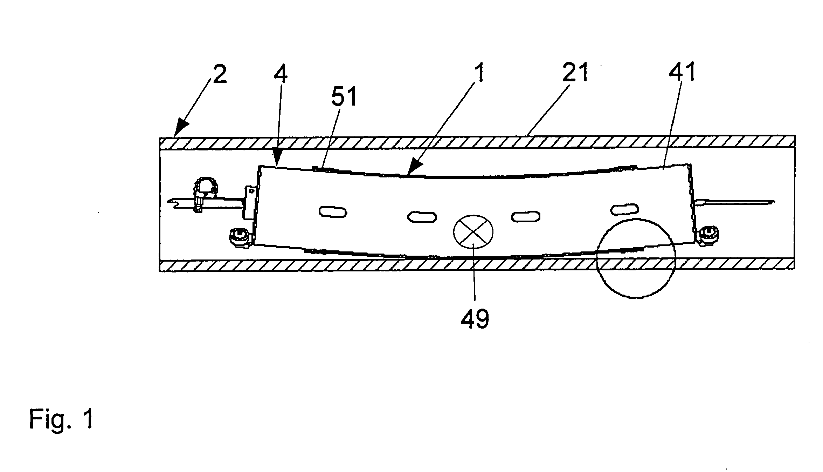

In Fig. 1 wird dargestellt, wie der Ballon mit dem Einlagestück 1 in das Rohr 2 eingebracht und darin derart positioniert wird, derart dass das vom Ballon 4 getragene Einlagestück 1 im Bereich des abzudichtenden Rohrabschnitts 21 zu liegen kommt. Anschließend wird der Ballon 4 aufgeblasen und das Einlagestück 1 an die Innenwand des Rohrs 2 angedrückt. Anschließend wird eine im Inneren des Ballons 4 befindliche UV-Lampe 49 eingeschaltet, wodurch das Aushärten des Klebstoffs 5 erfolgt.

Das eingesetzte Einlagestück 1 ist biegbar und/oder verformbar, insbesondere dehnbar und weist eine gummiartige Konsistenz auf; nach dem Aushärten ist es starr mit der Rohrinnenwand fest verbunden.

Eine bevorzugte Ausführungsform des erfindungsgemäßen Verfahrens besteht darin, dass das auf dem Ballon 4 aufgebrachte und mit Klebstoff 5 versehene Einlagestück 1 vor dem Einbringen in das Rohr 2 mit einer Schutzfolie 7 umwickelt wird. Nach der endgültigen Positionierung des Einlagestücks 1 im Rohr 2 und vor dem Aufblasen des Ballons 4 wird diese Schutzfolie 7 entfernt. Der wesentliche Vorteil der Schutzfolie 7 ergibt sich aus dem folgenden Zusammenhang: Während des Einbringens eines langen Einlagestücks 1 in das Rohr 2 hängt der Ballon 4 und das auf diesem Ballon 4 aufgebrachte Einlagestück 1 durch. Bei einer Bewegung in Längsrichtung des Rohrs 2 schleift das Einlagestück 1 auf dem Boden des Rohrs 2, wodurch Klebstoff 5 auf das Rohr 2 abtropft und eventuell Material vom Einlagestück 1 abgerieben wird. Ist das Einlagestück 1 jedoch mit einer Schutzfolie 7 umwickelt, wird dies wirkungsvoll vermieden, was zum Einen den Materialabrieb vom Einlagestück 1 an der Unterseite des Rohrs 2 verhindert und zum Anderen das Abtropfen des Klebstoffs 5 vom Einlagestück 1 verhindert.

Wie bereits erwähnt, ist die zeitliche Abfolge der einzelnen Verfahrensschritte im Wesentlichen ohne Belang und wesentlich ist, dass das Aufbringen des Klebstoffs, das Zurdeckungbringen der gegenüberliegenden Endbereiche 11, 12, das Aufbringen des Einlagestücks 1 auf den Ballon 4 sowie die Bildung der Schlaufe 16 vor dem Einbringen des Ballons 4 mit dem Einlagestück 1 in das Rohr 2 durchgeführt werden. Zuletzt wird der Ballon 4 aufgeblasen. Besonders vorteilhaft erweist sich in diesem Zusammenhang, zunächst auf das Einlagestück 1 oberflächlich Klebstoff 5 aufzubringen, anschließend das Einlagestück 1 auf den Ballon 4 aufzubringen, anschließend die beiden gegenüberliegenden Endbereiche 11, 12 zur Deckung zu bringen und danach das Einlagestück 1 am Ballon 4 anzulegen und eine Schlaufe 16 aus den nicht anliegenden Bereichen zu bilden.

Ferner ist eine Vertauschung der ersten beiden Verfahrensschritte möglich, wobei in diesem Fall zuerst das Einlagestück 1 auf den Ballon 4 aufgebracht wird und anschließend der Klebstoff 5 auf die Außenfläche des Einlagestücks 1 aufgebracht wird.

Um während des Aufblasens des Ballons das gegenseitige Verrutschen der beiden Endbereiche 11, 12 zu vermeiden, kann vorgesehen werden, dass im Überlappungsbereich 13 zwischen den beiden Endbereichen 11, 12 Klebstoff 5 eingebracht wird. Ferner kann, um zusätzliche mechanische Stabilität zu gewährleisten, ein kammförmiges Halterungselement bzw. ein Kamm 6 eingesetzt werden, welcher nach zwei gegenüberliegenden Richtungen Fortsätze oder Dornen 61 aufweist, welche bei Druckbeaufschlagung in das Einlagestück 1 eindringen. Die Dornen 61 weisen dabei eine Länge von bis zu 100% der Dicke des Einlagestücks 1 auf. Ferner umfasst der Kamm einen Körper bzw. ein Gehäuse 62 von welchem die Dornen 61 in gegenüberliegende Richtungen abstehen. Die Länge des Körpers 62 des Kamms 6 entspricht dabei der Länge I des Einlagestücks 1. Die Breite des Körpers 62 ist kleiner als die Breite des Überlappungsbereichs 13 und liegt vorzugsweise im bereich zwischen 40% und 80% der Breite des Bereichs. Die Dicke des Körpers 62 ist möglichst klein zu halten und liegt etwa im Bereich von 5% bis zu 20% der Dicke des Einlagestücks 1. Dies ist notwendig, da sonst im Bereich des Überlappungsbereichs 13 die Dicke des Einlagestücks sehr groß ist und der Radius des Rohrs 2 unsymmetrisch verengt würde.

Der Klebstoff 5 ist insbesondere mit UV-aushärtbarem Harz gebildet ist bzw. besteht aus UV-aushärtbarem Harz. Für diesen Fall wird ein UV-durchlässiger Ballon 4 eingesetzt. Der Klebstoff 5 wird nach der Positionierung des Einlagestücks 1 mittels UV-Licht von im Inneren des Ballons 4 her bestrahlt und ausgehärtet.

Ziel eines derartigen Vorgehens ist es die für das Aushärten benötigte Zeit zu verringern und den Zeitpunkt des Aushärtens des Harzes gezielt zu steuern. Ein weiteres Ziel ist es, das Harz in möglichst kurzer Zeit aushärten zu lassen, wobei das Harz vor dem Aufbringen auf das Rohrstück möglichst nicht aushärten soll.

Die Erfindung ermöglicht eine besonders genaue Kontrolle über den Aushärtevorgang, wobei der mit geringer menschlicher Interaktion mittels einer Funk-Fernsteuerung bei gleichzeitiger Sicht sowie mittels einer Kamera mit Funk-Übertragung das Aushärten überwacht werden kann. Der Zeitpunkt der Aushärtung des Harzes kann dabei sehr exakt vorgenommen werden. Durch eine im Bereich des Ballons befindliche Kamera kann das Einlagestück exakt positioniert werden und anschließend der Aushärtevorgang geregelt werden.

## Patentansprüche

1. Verfahren zum raschen Abdichten eines Rohrabschnittes (21) in einem Rohr (2) mittels eines aushärtbaren, teilweise ausgehärteten, flachen, insbesondere rechteckförmigen, Einlagestücks (1) oder PrePregs, **dadurch gekennzeichnet, dass**
a) zumindest auf Teilbereiche, vorzugsweise die gesamte der Außenfläche der zur Anlage an das Rohr (2) bestimmten Fläche des Einlagestücks (1) oberflächlich ein Klebstoff (5) aufgebracht wird,
b) zwei gegenüberliegende Endbereiche (11, 12) des Einlagestücks (1) übereinander gelegt oder zur Deckung gebracht werden und im ausgebildeten Überlappungsbereich (13) zwischen die überlappten Endbereiche (11, 12) ebenfalls Klebstoff (5) eingebracht wird, wodurch dem Einlagestück (1) die Form eines Zylindermantels oder Ringzylinders erteilt wird, dessen Durchmesser im Wesentlichem dem Innendurchmesser des Rohrs (2) entspricht oder geringfügig kleiner ist als der Innendurchmesser,
c) das Einlagestück (1) auf einen langgestreckten, im wesentlichen zylindrischen Ballon (4) aufgebracht oder diesem übergestülpt oder um diesen herum gelegt wird, wobei der Durchmesser des Ballons (4) kleiner gehalten ist als der Innendurchmesser des Rohrs (2),
d) ein Teil des Einlagestücks (1) an den Ballon (4) angelegt und dessen Mantel (41) zumindest in einem Teilbereich durchgehend abdeckt wird und der restliche, nicht am Ballon (4) anliegende Bereich (15) des Einlagestücks (1) in Form einer Schlaufe (16) eingeschlagen und gegebenenfalls die Schlaufe (16) an die Außenfläche des Einlagestücks (1) angedrückt wird,
e) der Ballon (4) mit dem Einlagestück (1) in das Rohr (2) eingebracht und darin derart positioniert wird, dass das vom Ballon (4) getragene Einlagestück (1) im Bereich des abzudichtenden Rohrabschnitts (21) zu liegen kommt, und
f) der Ballon (4) aufgeblasen, das Einlagestück (1) an die Innenwand des Rohres (2) angedrückt und der Klebstoff (5) ausgehärtet werden.

2. Verfahren nach Anspruch 1, **dadurch gekennzeichnet, dass** das eingesetzte Einlagestück (1) in seiner ursprünglichen Ausformung rechteckige Gestalt aufweist.

3. Verfahren nach Anspruch 1 oder 2, **dadurch gekennzeichnet, dass** die Erstreckung des Überlappungsbereichs (13) in Umfangsrichtung des geformten ringzylindrischen Einlagestückes (1) im Bereich von 5% bis 15% des Innenumfangs des Rohres (2) liegt.

4. Verfahren nach einem der vorangehenden Ansprüche, **dadurch gekennzeichnet, dass** die äußeren Endbereiche (17) des Einlagestücks (1) im Bereich der Öffnungen an den äußeren Umfangsflächen des ringzylindrisch geformten Einlagestücks (1) mit einer Schicht aus weiterem Klebstoff (51) versehen werden.

5. Verfahren nach einem der vorangehenden Ansprüche, **dadurch gekennzeichnet, dass** der Klebstoff (5) mit wärme- bzw. UV-aushärtbarem Harz gebildet ist oder aus wärme- bzw. UV-aushärtbarem Harz besteht.

6. Verfahren nach einem der vorangehenden Ansprüche, **dadurch gekennzeichnet, dass** der weitere Klebstoff (51) ein in Wasser aushärtendes oder wasserfestes Epoxidharz ist.

7. Verfahren nach einem der vorangehenden Ansprüche, **dadurch gekennzeichnet, dass** ein UV-durchlässiger Ballon (4) eingesetzt wird und der Klebstoff (5) mittels UV-Licht von im Inneren des Ballons (4) her bestrahlt und ausgehärtet wird.

8. Verfahren nach einem der vorangehenden Ansprüche, **dadurch gekennzeichnet, dass** das teilweise ausgehärtete Einlagestück (1) biegbar und/oder verformbar, insbesondere dehnbar, ist oder gummiartige Konsistenz aufweist.

9. Verfahren nach einem der vorangehenden Ansprüche, **dadurch gekennzeichnet, dass** das auf den Ballon (4) aufgebrachte und mit Klebstoff (5) versehene Einlagestück (1) vor dem Einbringen in das Rohr (2) mit einer Schutzfolie (7) umwickelt wird, welche nach der Positionierung des Einlagestücks (1) im Rohr (2) vor dem Aufblasen des Ballons (4) entfernt wird.

10. Verfahren nach einem der vorangehenden Ansprüche, **dadurch gekennzeichnet, dass** die Verfahrensschritte a)-f) des Anspruchs 1 in der Reihenfolge a), c), b), d), e), f) durchgeführt werden.

11. Verfahren nach einem der Ansprüche 1 bis 9, **dadurch gekennzeichnet, dass** die Verfahrensschritte a)-f) des Anspruchs 1 in der Reihenfolge c), a), b), d), e), f) durchgeführt werden.
